# FASCICULE DE BREVET EUROPEEN

(11) **EP 0 725 905 B1**
(45) Date de publication et mention de la délivrance du brevet: **14.07.1999**
(21) Numéro de dépôt: 95930563.2
(22) Date de dépôt: 05.09.1995
(51) Int. Cl.: F16F 15/131, F16F 15/134

(54) **DOUBLE VOLANT AMORTISSEUR**
ZWEIMASSENSCHWUNGRAD
DOUBLE DAMPER FLYWHEEL

(30) Priorité: 06.09.1994 FR 9410652
(43) Date de publication de la demande: 14.08.1996
(73) Titulaire: VALEO, 75017 Paris (FR)
(72) Inventeur: MOKDAD, Ayman, F-93400 Saint-Ouen (FR)
(74) Mandataire: Gamonal, Didier
(86) Numéro de dépôt international: FR9501156
(87) Numéro de publication internationale: WO9607838

(56) Documents cités:
- EP-A- 0 427 983
- EP-A- 0 464 997
- WO-A-94/07058
- WO-A-94/27062
- FR-A- 2 658 880
- FR-A- 2 695 579
- GB-A- 2 255 395

## Description

La présente invention concerne un volant amortisseur et plus particulièrement un double volant amortisseur du genre comportant deux masses coaxiales montées mobiles l'une par rapport à l'autre, à l'encontre de moyens élastiques.

Un tel volant amortisseur, notamment pour véhicule automobile, est décrit par exemple dans le document FR-A-2 565 650. L'une des masses dite "première masse" est destinée à être fixée à un arbre menant tandis que l'autre masse dite "deuxième masse" comporte un plateau de réaction pour un embrayage à friction. Généralement, les masses en question sont réalisées en matériau moulé, typiquement en fonte. Selon la complexité du dispositif, le moulage est relativement difficile à réaliser. En outre, la fonte résiste mal aux forces centrifuges, dans des conditions d'utilisation extrêmes.

Pour cette raison, on a prévu dans les documents FR-A-2 695 579 et EP-A-0 427 983 de constituer la première masse de plusieurs pièces annulaires, dont certaines au moins sont en tôle emboutie, solidarisées coaxialement les unes avec les autres.

L'une de ces pièces, dite première pièce, comporte une partie centrale solidaire d'un moyeu et portant un palier de rotation de l'autre masse formant plateau de réaction pour un embrayage à friction.

Une autre desdites pièces forme une couronne entretoise entre la première pièce en tôle et une deuxième pièce en tôle.

Il en résulte que l'on ne tire pas complètement parti de ces deux pièces en tôle.

En outre, comme mieux visible à la figure 1 du document EP-A-0 427 983, cette couronne augmente l'encombrement radial du volant amortisseur.

Ceci peut être gênant dans le cas où ce volant amortisseur est monté dans un carter présentant des parois inclinées s'étendant à proximité de la périphérie externe de la seconde masse. Il est donc souhaitable dans certains cas de diminuer cet encombrement radial.

Dans le document EP-A-0 464 997 conforme au préambule de la revendication 1 on n'augmente pas l'encombrement radial mais on réduit l'inertie.

L'invention concerne plus particulièrement un perfectionnement de ladite première masse, permettant de réaliser celle-ci d'une façon plus simple et plus économique, dans un matériau résistant mieux aux effets de la force centrifuge tout en augmentant l'inertie, et sans augmenter de trop l'encombrement radial du volant amortisseur au niveau de la périphérie externe de la deuxième masse.

Conformément à l'invention ce problème est résolu par la partie caractérisante de la revendication 1.

Grâce à l'invention, on peut augmenter l'inertie, tout en ayant une bonne tenue à la force centrifuge et en ayant des pièces de forme simple.

En effet, les pièces selon l'invention sont plus denses que de la fonte et la jupe externe de la troisième pièce s'étend radialement au dessus de la deuxième masse qu'elle entoure au moins partiellement.

On appréciera que cette jupe a une épaisseur moindre que les couronnes entretoises selon l'art antérieur, en sorte que l'encombrement radial du volant amortisseur à cet endroit est réduit.

On appréciera la forme simple de cette troisième pièce permettant aisément de monter les moyens élastiques d'amortissement à la faveur de son second groupe de pattes radiales.

Certes, on aurait pu doter la première pièce d'une jupe externe de la même manière que la troisième pièce et fixer entre elle les jupes des première et troisième pièces, mais dans ce cas, on aurait augmenté l'encombrement radial car la jupe de la première pièce aurait été emmanchée sur la périphérie externe de la jupe de la troisième pièce.

En outre cela aurait conduit à emboutir profondément la première pièce au détriment de la facilité de fabrication.

Ainsi grâce au premier groupe de pattes de la troisième pièce, on simplifie la première pièce tout en diminuant l'encombrement radial du volant amortisseur et en ayant la possibilité d'implanter les moyens élastiques d'amortissement sur une grande circonférence.

Dans une première forme de réalisation, le second groupe de pattes radiales porte des moyens d'articulation pour les moyens élastiques d'amortissement précités.

Ainsi les pattes radiales de ce second groupe sont dans une forme de réalisation pourvues de trous en alignement avec des trous de la première pièce annulaire, des tourillons d'orientation axiale étant montés dans lesdits trous.

Ces moyens élastiques d'amortissement peuvent être constitués par des cassettes abritant au moins un ressort, comme décrit par exemple dans le document WO-A-94/27062 publié après la date de priorité de la demande presente, chaque cassette comportant un palier engagé sur le tourillon.

Grâce à l'invention on peut conformer la première pièce annulaire en sorte que le volant amortisseur soit plus épais à sa périphérie externe qu'à sa périphérie interne.

Cette première pièce peut avoir une forme sinueuse à sa périphérie externe ce qui permet de fixer aisément une couronne de démarrage propre à être entraînée par le démarreur d'un véhicule automobile, ainsi qu'une deuxième pièce permettant encore de rajouter de l'inertie.

Ainsi on occupe au mieux l'espace disponible et ce avec des pièces simples.

L'invention sera mieux comprise et d'autres avantages de celle-ci apparaîtront plus clairement à la lumière de la description qui va suivre d'un mode de réalisation possible d'un volant amortisseur conforme à l'invention, donnée uniquement à titre d'exemple et faite en référence aux dessins annexés dans lesquels:
- la figure 1 est une demi-coupe axiale d'un double volant amortisseur conforme à l'invention ;
- la figure 2 est une vue de détail d'une partie des moyens élastiques ; et
- la figure 3 est une vue en perspective des différentes pièces annulaires constituant ladite première masse, avant leur solidarisation.

Sur les dessins, on a représenté un dispositif formant double volant amortisseur 11 comportant deux parties coaxiales montées mobiles l'une par rapport à l'autre à l'encontre de moyens élastiques d'amortissement 14. Ce dispositif appartient à un volant amortisseur pour véhicule automobile. Les deux parties constituent des masses coaxiales tournant autour d'un axe de symétrie x-x qui est aussi l'axe de rotation commun d'un arbre menant 16, ici le vilebrequin d'un moteur à combustion interne, d'un embrayage à friction partiellement représenté et d'un arbre d'entrée d'une boîte de vitesses, non représenté. Une première masse tournante 12 est connectée, ici par des vis 15, situées au voisinage de sa périphérie interne à l'arbre menant 16, tandis qu'une seconde masse tournante 13 est couplée par l'intermédiaire d'un mécanisme d'embrayage et d'un disque de friction 19 à l'arbre d'entrée de la boîte de vitesses.

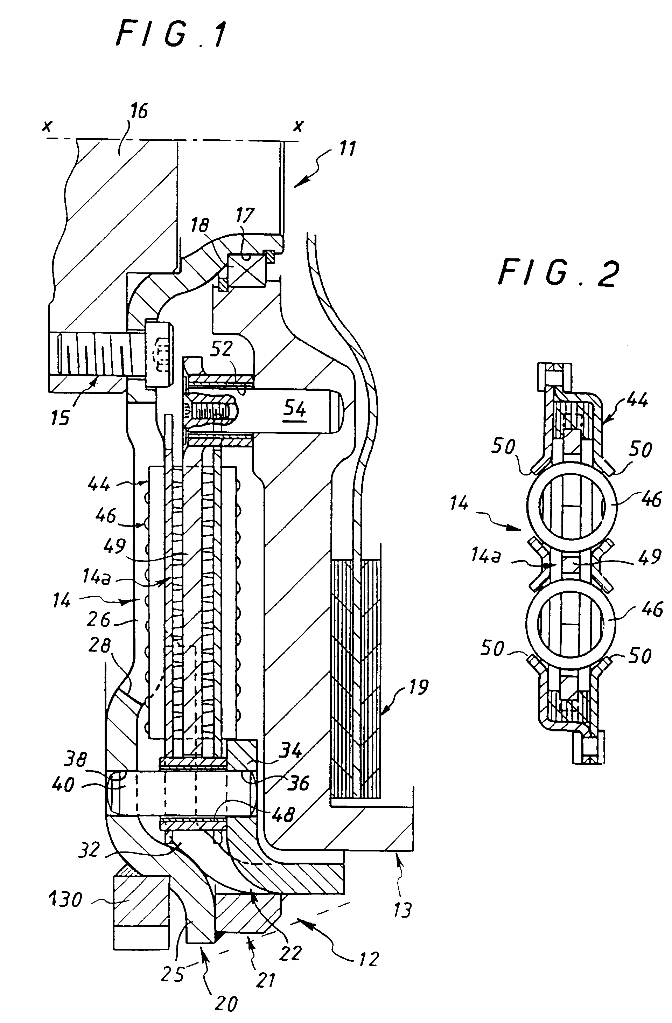

La seconde masse est montée en rotation sur un moyeu tubulaire 17 de la première masse 12 par l'intermédiaire d'un palier de rotation constitué ici d'un roulement à billes 18. La seconde masse 13 constitue de façon classique le plateau de réaction de l'embrayage à friction mentionné ci-dessus. On distingue sur la figure 1, le disque de friction 19 de cet embrayage, en engagement avec la masse 13 formant plateau de réaction.

Ainsi la deuxième masse 13 est liée en rotation de manière débrayable à un arbre mené, tel que l'arbre d'entrée de la boîte de vitesses, dans le cas d'une application à un véhicule automobile, via le disque de friction 19 présentant de manière usuelle à sa périphérie interne un moyeu (non visible) cannelé intérieurement pour sa liaison en rotation avec ledit arbre mené.

Pour mémoire, on rappellera, que le mécanisme d'embrayage comporte un couvercle rapporté sur le plateau de réaction 13, un diaphragme, un plateau de pression mobile axialement. Le diaphragme sollicite le plateau de pression pour serrage des garnitures de frottement du disque 19 entre lesdits plateaux de pression et de réaction.

Ainsi l'embrayage est normalement engagé et le mouvement est transmis de l'arbre menant à l'arbre mené via le disque 19. Pour désengager l'embrayage, on appuie sur l'extrémité des doigts du diaphragme à l'aide d'une butée de débrayage (non représentée). Cette action se fait en tirant ou en poussant selon les cas et permet de faire cesser l'action qu'exerce le diaphragme sur le plateau de pression, en sorte que les garnitures de frottement du disque 19 sont libérées.

Selon une caractéristique remarquable de l'invention, ladite première masse 12 est constituée de plusieurs pièces annulaires 20, 21, 22 (trois dans l'exemple représenté), solidarisées coaxialement les unes aux autres. Les pièces annulaires sont ici soudées entre elles, ce qui laisse plus d'espace pour loger les moyens élastiques 14. Les pièces 20 et 22 sont ici en tôle emboutie, la pièce 21 est ici en forme d'anneau en acier roulé et soudé pour augmenter l'inertie. Elle pourrait aussi être en tôle emboutie.

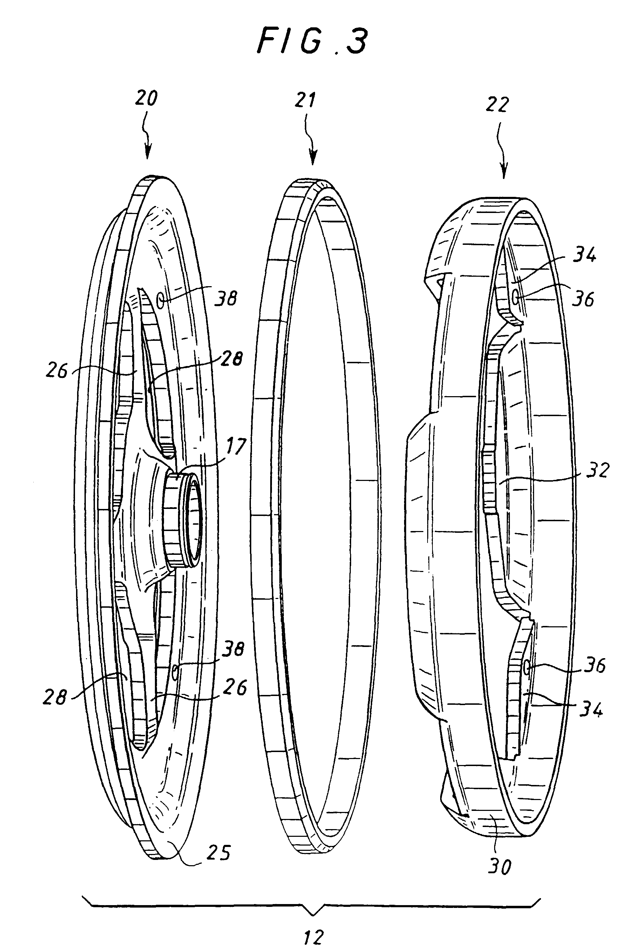

Comme cela est visible sur la figure 3, on distingue une première pièce annulaire 20 en tôle emboutie comportant une couronne périphérique 25 reliée par quatre bras radiaux 26 à une partie centrale, globalement d'orientation transversale, comportant ici d'un seul tenant le moyeu 17 précité. Ce moyeu est usiné pour porter le roulement à billes 18 constituant le palier de rotation de la deuxième masse 13. Les larges découpes 28 ménagées entre les quatre bras permettent, comme on le verra plus loin, de loger des cassettes que comportent les moyens élastiques 14 précités dans un espace aussi réduit que possible axialement. Une bonne ventilation est obtenue également ce qui permet de bien refroidir la seconde masse 13. Une couronne crantée, dite couronne de démarrage 130, prévue pour être entraînée par un démarreur, est également soudée à la périphérie externe de ladite première pièce annulaire 20 sur la couronne 25 de celle-ci, qui a ainsi une forme sinueuse pour présenter à sa périphérie externe un rebord globalement d'orientation transversale dirigé en direction opposée à l'axe X-X. Ce rebord est décalé axialement en direction de la seconde masse 13 par rapport à la partie principale de la première pièce 20 qui a ainsi globalement la forme d'une assiette plate avec un fond troué et portant centralement le moyeu 17.

Une seconde pièce annulaire 21 est constituée d'un simple anneau (sans bras radiaux) formant entretoise axiale et fixée à la périphérie de la première pièce annulaire 20, de l'autre côté de la couronne de démarrage 130.

Plus précisément cette pièce 21 est fixée au rebord de la couronne 25, la couronne de démarrage 130 et ladite seconde pièce 21 étant disposées de part et d'autre dudit rebord (figure 1). Cette seconde pièce annulaire est soudée à la première pièce par un cordon de soudure périphérique.

Plus précisément cette seconde pièce est soudée au rebord de la couronne 25 ainsi qu'éventuellement à une troisième pièce. On voit que cette deuxième pièce 21 est chanfreinée pour ne pas interférer avec le carter d'embrayage à l'intérieur duquel est monté le volant amortisseur.

A la figure 1 on a représenté partiellement en pointillés la trace de ce carter.

Enfin, selon l'invention, ladite première masse comporte une troisième pièce annulaire 22 munie de deux groupes de pattes radiales. Cette troisième pièce annulaire est constituée d'un flasque annulaire en tôle emboutie pourvu à sa périphérie externe d'une jupe externe cylindrique 30 s'étendant axialement. Cette jupe 30 entoure ici partiellement la seconde masse 13 comme mieux visible à la figure 1. Cette jupe s'étend donc radialement à distance d'une jupe que présente la seconde masse 13 pour fixation à l'extrémité libre de celle-ci du couvercle de l'embrayage précité. Ainsi la jupe 30 entoure le plateau de réaction de la deuxième masse selon une importante caractéristique de l'invention.

On voit à la figure 1 que la jupe 30 vient au plus près du carter de l'embrayage permettant d'occuper ainsi l'espace disponible tout en augmentant l'inertie du volant amortisseur grâce à la jupe 30 et ainsi qu'à la seconde pièce annulaire 21 fixée également par soudage à la jupe 30.

Des pattes radiales 32,34 sont rattachées à cette jupe cylindrique et rabattues vers l'intérieur globalement perpendiculairement à l'axe X-X, les pattes des deux groupes s'étendant dans deux plans parallèles décalés axialement. Ainsi, le flasque est pourvu d'un premier groupe de quatre pattes radiales 32 par lesquelles il est solidarisé à ladite première pièce annulaire, par des soudures entre chacune de ces pattes et l'un des bras radiaux 26. En variante cette fixation peut être réalisée par rivetage.

Par ailleurs, cette troisième pièce annulaire comporte un second groupe de quatre pattes radiales 34 s'étendant dans un autre plan et portant des moyens d'articulation pour les moyens élastiques d'amortissement précités.

Ainsi, comme cela est visible sur les figures 1 et 3, les pattes radiales 34 sont pourvues de trous 36 en alignement avec d'autres trous 38 de la couronne externe 25 de ladite première pièce annulaire 20 et des tourillons 40 d'orientation axiale sont montés dans ces trous, chaque tourillon permettant l'articulation d'un élément 14a des moyens élastiques 14 précités qui interviennent ici globalement radialement entre les deux masses. Dans l'exemple, les moyens élastiques d'amortissement 14 sont constitués par quatre cassettes 44 abritant des ressorts 46. Chaque cassette comporte un palier 48 engagé sur le tourillon 40 correspondant de ladite première masse. La cassette 44, relativement plate axialement, abrite deux ressorts 46 et un voile central 49, muni de découpes, ici en forme de fenêtres, permettant le logement desdits ressorts.

Les parois de la cassette forment deux pièces de guidage parallèles pour les ressorts, elles sont munies de fenêtres 50 à bords longitudinaux repliés vers l'extérieur. Le voile est solidaire d'un palier 52 monté au voisinage de son extrémité radialement la plus interne et ce palier abrite un tourillon 54 monté dans l'épaisseur de ladite seconde masse 13 à la périphérie interne de celle-ci. Ainsi les pattes 32 constituent des pattes de fixation, tandis que les pattes 34 sont conformées pour monter les moyens élastiques d'amortissement.

Les ressorts 46 sont sollicités ainsi en compression par les deux pièces de guidage et le voile formant des tirants montés tête-bêche, les pièces de guidage étant montées à articulation à la périphérie externe de la première masse 12, et ce sur une grande circonférence grâce à la troisième pièce annulaire 22, et à articulation à la périphérie interne de la seconde masse 13.

Plus précisément les pièces de guidage sont réunies entre elles latéralement, ici par rivetage comme visible à la figure 2, pour former l'élément 14a solidaire du palier 48 s'étendant entre les deux pièces de guidage en étant fixé à celles-ci à chacune de ses extrémités par exemple par soudage.

Pour la position de repos, les paliers 48 et 52 sont globalement radialement alignés. En fonctionnement les cassettes s'inclinent avec compression des ressorts 46.

Grâce à l'invention les cassettes 44 et les ressorts 46 peuvent avoir une grande longueur du fait que les tourillons 40 peuvent être implantés à la périphérie externe de la première masse 12 grâce à la configuration de la troisième pièce annulaire 22.

Ainsi un bon compromis est réalisé, ledit compromis permettant de réduire l'encombrement radial du volant amortisseur tout en ayant des moyens élastiques d'amortissement implantés sur une grande circonférence.

Bien entendu, il est possible de concevoir une première masse avec des pièces en tôle emboutie soudées entre elles avec une conformation différente permettant d'abriter des moyens élastiques plus classiques, c'est-à-dire à action circonférentielle. Des moyens de frottement peuvent être agencés entre des parties en regard desdites première et seconde masses.

Plus précisément les pattes 34 peuvent être embouties localement de même que la première pièce annulaire 20, pour appui des extrémités circonférentielles de ressorts à boudin à action circonférentielle actionnés par un voile, comme décrit par exemple dans le document EP-A-0 427 983 (figure 1), ledit voile étant dans ce cas fixé à la seconde masse.

Les pattes 34 sont donc d'une manière générale conformées pour le montage des moyens élastiques d'amortissement.

Tout ceci étant rendu possible grâce au décalage circonférentiel entre les pattes 32 et 34.

Bien entendu chaque cassette 44 ne peut abriter qu'un ressort comme décrit par exemple dans le document WO-A-94/27062, ledit ressort étant adapté à être comprimé entre un piston articulé à sa périphérie interne à la seconde masse et un cylindre articulé à sa périphérie externe à la première masse.

On notera que la première pièce 20 a une forme tortueuse, en sorte qu'axialement le volant amortisseur est plus épais à sa périphérie externe qu'à sa périphérie interne.

De même on remarquera que les pattes 34 du second groupe sont adjacentes à la deuxième masse 13, plus particulièrement à la face transversale de celle-ci, tournée vers la partie transversale de la première pièce 20.

On notera que les pattes 32 se raccordent à la jupe 30 par des zones arrondies. Il en est de même des pattes 34.

D'une manière générale, on notera que la troisième pièce 22 est beaucoup plus creuse que la première pièce 20.

La pièce 22 abrite les moyens élastiques d'amortissement 14 et sa jupe 30 peut être prolongée axialement selon les applications.

Bien entendu la première pièce peut ne pas comporter de découpe 28 dans le cas où axialement on a de la place.

## Revendications

1. Volant amortisseur notamment pour véhicule automobile, du genre comportant deux masses coaxiales montées mobiles l'une par rapport à l'autre, à l'encontre de moyens élastiques d'amortissement (14), dans lequel l'une des masses, dite première masse (12), est destinée à être fixée à un arbre menant (16) et est constituée de plusieurs pièces annulaires (20, 21, 22), dont certaines au moins sont en tôle emboutie, solidarisées coaxialement les unes aux autres et dans lequel l'une desdites pièces annulaires précitées, dite première pièce annulaire (20), est en tôle emboutie et comporte une partie centrale, globalement d'orientation transversale, solidaire d'un moyeu (17) portant un palier de rotation (18) de l'autre masse, dite deuxième masse (13), comportant un plateau formant le plateau de réaction d'un embrayage à friction, tandis qu'une autre desdites pièces annulaires précitées, dite troisième pièce annulaire (22), est en tôle emboutie, abrite les moyens élastiques d'amortissement (14) et est constituée d'un flasque annulaire pourvu à sa périphérie externe d'une jupe cylindrique (30) s'étendant axialement, caractérisé en ce que ladite jupe entoure au moins en partie le plateau de réaction de la deuxième masse (13), en ce que ce flasque comporte un premier groupe de pattes radiales (32) par lesquelles il est solidarisé à ladite première pièce annulaire (20) et un second groupe de pattes radiales (34) conformé pour monter les moyens élastiques d'amortissement (14), les pattes (34) de ce second groupe étant décalées axialement par rapport à celles (32) du premier groupe et en ce que les deux groupes de pattes (32, 34) sont rabattues sensiblement radialement vers l'intérieur.

2. Volant amortisseur selon la revendication 1, caractérisé en ce que lesdites pièces annulaires (20, 21, 22) sont soudées entre elles.

3. Volant amortisseur selon la revendication 1, caractérisé en ce que ladite première pièce annulaire (20) précitée comporte une couronne périphérique (25) reliée par des bras radiaux (26) à une partie centrale comportant d'un seul tenant le moyeu (17).

4. Volant amortisseur selon la revendication 3, caractérisé en ce que ledit moyeu est usiné pour porter un roulement à billes (18) constituant ledit palier.

5. Volant amortisseur selon la revendication 1, caractérisé en ce qu'une seconde pièce annulaire (21) précitée est constituée d'un anneau formant entretoise axiale, fixée à la périphérie de ladite première pièce annulaire (20).

6. Volant amortisseur selon la revendication 5, caractérisé en ce qu'une couronne crantée, dite couronne de démarrage (130), prévue pour être entraînée par un démarreur et soudée à la périphérie externe de ladite pièce annulaire (20) sur la couronne périphérique (25) de celle-ci, et en ce que la seconde pièce annulaire (21) est soudée à la périphérie de la première pièce annulaire (20) de l'autre côté de la couronne de démarreur (130).

7. Volant amortisseur selon la revendication 1, caractérisé en ce que le second groupe de pattes radiales (34) porte des moyens d'articulation pour les moyens élastiques d'amortissement précités.

8. Volant amortisseur selon la revendication 7, caractérisé en ce que les pattes radiales (34) du second groupe de pattes radiales (34) sont pourvues de trous (36) en alignement avec des trous de la première pièce annulaire (20) et en ce que des tourillons (40) d'orientation axiale sont montés dans lesdits trous.

9. Volant amortisseur selon la revendication 8, caractérisé en ce que les moyens élastiques d'amortissement (14) sont constitués par des cassettes (44) abritant des ressorts (46) et en ce que chaque cassette (44) comporte un palier (48) engagé sur le tourillon (40) correspondant de la première masse.

10. Volant amortisseur selon la revendication 9, caractérisé en ce que la première pièce annulaire (20) comporte des découpes (28) ménagées entre les bras radiaux (26) permettent de loger les cassettes (44).

## Patentansprüche

1. Dämpfungsschwungrad, insbesondere für Kraftfahrzeuge, umfassend zwei im Verhältnis zueinander beweglich entgegen elastischen Dämpfungsmitteln (14) gelagerte koaxiale Massen, wobei eine der Massen, die als erste Masse (12) bezeichnet wird, zur Befestigung an einer treibenden Welle (16) bestimmt ist und aus mehreren ringförmigen Elementen (20, 21, 22) besteht, von denen wenigstens bestimmte aus tiefgezogenem Blech bestehen, die koaxial fest miteinander verbunden sind, und wobei eines der vorgenannten ringförmigen Elemente, das als erstes ringförmiges Element (20) bezeichnet wird, aus tiefgezogenem Blech besteht und einen insgesamt quer ausgerichteten Mittelteil umfaßt, der fest mit einer Nabe (17) verbunden ist, die ein Drehlager (18) der als zweite Masse (13) bezeichneten anderen Masse trägt, die eine als Gegenanpreßplatte einer Reibungskupplung dienende Platte trägt, während ein anderes der vorgenannten ringförmigen Elemente, das als drittes ringförmiges Element (22) bezeichnet wird, aus tiefgezogenem Blech ausgeführt ist, die elastischen Dämpfungsmitiel (14) enthält und aus einem ringförmigen Flansch besteht, der an seinem äußeren Umfang mit einer zylindrischen Einrassung (30) versehen ist, die sich axial erstreckt, **dadurch gekennzeichnet,** daß die besagte Einfassung die Gegenanpreßplatte der zweiten Masse (13) wenigstens teilweise umgibt, daß dieser Flansch eine erste Gruppe von radialen Ansätzen (32), durch die er fest mit dem besagten ersten ringförmigen Element (20) verbunden ist, und eine zweite Gruppe von radialen Ansätzen (34) umfaßt, die für den Einbau der elastischen Dämpfungsmittel (14) gestaltet ist, wobei die Ansätze (34) dieser zweiten Gruppe axial im Verhältnis zu denjenigen (32) der ersten Gruppe versetzt sind, und daß die zwei Gruppen von Ansätzen (32, 34) in etwa radial nach innen umgebogen sind.

2. Dämpfungsschwungrad nach Anspruch 1, **dadurch gekennzeichnet,** daß die besagten ringförmigen Elemente (20, 21, 22) aneinander verschweißt sind.

3. Dämpfungsschwungrad nach Anspruch 1, **dadurch gekennzeichnet**, daß das vorgenannte erste ringförmige Element (20) einen Umfangskranz (25) umfaßt, der durch radiale Arme (26) mit einem Mittelteil verbunden ist, der einstückig die Nabe (17) umfaßt.

4. Dämpfungsschwungrad nach Anspruch 3, **dadurch gekennzeichnet,** daß die besagte Nabe bearbeitet ist, um ein Kugellager (18) zu tragen, das das besagte Lager bildet.

5. Dämpfungsschwungrad nach Anspruch 1, **dadurch gekennzeichnet,** daß ein zweites vorgenanntes ringförmiges Element (21) aus einem Ring besteht, der ein axiales Abstandsstück bildet, das am Umfang des besagten ersten ringförmigen Elements (20) befestigt ist.

6. Dämpfungsschwungrad nach Anspruch 5, **dadurch gekennzeichnet**, daß ein als Anlasserzahnkranz (130) bezeichneter Zahnkranz, der für den Antrieb durch einen Anlasser vorgesehen ist, am äußeren Umfang des besagten ringförmigen Elements (20) auf dessen Umfangskranz (25) verschweißt ist und daß das zweite ringförmige Element (21) am Umfang des ersten ringförmigen Elements (20) auf der anderen Seite des Anlasserzahnkranzes (130) verschweißt ist.

7. Dämpfungsschwungrad nach Anspruch 1, **dadurch gekennzeichnet,** daß die zweite Gruppe von radialen Ansätzen (34) Anlenkmittel für die vorgenannten elastischen Dämpfungsmittel trägt.

8. Dämpfungsschwungrad nach Anspruch 7, **dadurch gekennzeichnet,** daß die radialen Ansätze (34) der zweiten Gruppe von radialen Ansätzen (34) mit Löchern (36) fluchtend mit Löchern des ersten ringförmigen Elements (20) versehen sind und daß axial ausgerichtete Lagerzapfen (40) in den besagten Löchern angebracht sind.

9. Dämpfungsschwungrad nach Anspruch 8, **dadurch gekennzeichnet,** daß die elastischen Dämpfungsmittel (14) aus Kassetten (44) bestehen, die Federn (46) enthalten, und daß jede Kassette (44) ein Lager (48) umfaßt, das am entsprechenden Zapfen (40) der ersten Masse eingesetzt ist.

10. Dampfungsschwungrad nach Anspruch 9,**dadurch gekennzeichnet,** daß das erste ringförmige Element (20) Einschnitte (28) enthält, die zwischen den radialen Armen (26) eingearbeitet sind und die Aufnahme der Kassetten (44) ermöglichen.

## Claims

1. A damped flywheel, especially for a motor vehicle, of the kind comprising two coaxial masses mounted for movement of one with respect to the other against the action of resilient damping means (14), in which one of the masses, referred to as a first mass (12), is adapted to be fixed to a driving shaft (16) and consists of a plurality of annular members (20, 21, 22), at least some of which are press-formed from metal plate, and which are fixed to each other coaxially, wherein one of the above mentioned annular members, referred to as the first annular member (20), is press-formed from metal plate and comprises a central portion, orientated generally transversely and fixed to a hub (17) which carries a bearing (18) for rotation of the other mass, referred to as the second mass (13), which comprises a plate that constitutes the reaction plate of a friction clutch, while another one of the above mentioned annular members, referred to as a third annular member (22) and press-formed from metal plate, encloses the resilient damping means (14) and comprises an annular radial plate having at its outer periphery a cylindrical skirt portion (30) which extends axially, characterised in that the said skirt portion at least partly surrounds the reaction plate of the second mass (13), and in that the said radial plate includes a first group of radial lugs (32) by means of which it is fixed to the said first annular member 920), together with a second group of radial lugs (34) which are configured for mounting the resilient damping means (14), the lugs (34) of this second group being offset axially with respect to those (32) in the first group, and in that the two groups of lugs (32, 34) are bent back inwards, substantially radially.

2. A damped flywheel according to Claim 1, characterised in that the said annular members (20, 21, 22) are welded together.

3. A damped flywheel according to Claim 1, characterised in that the above mentioned said first annular member (20) includes a peripheral crown portion (25) which is joined through radial arms (26) to a central portion which includes the hub (17) integrally therewith.

4. A damped flywheel according to Claim 3, characterised in that the said hub is machined for carrying a ball bearing (18) which constitutes the said bearing.

5. A damped flywheel according to Claim 1, characterised in that a second above mentioned annular member (21) comprises a ring defining an axial spacer and fixed to the periphery of the said first annular member (20).

6. A damped flywheel according to Claim 5, characterised in that a toothed crown, referred to as a starter crown (130), which is arranged to be driven by a starter, is welded to the outer periphery of the said annular member (20) on the peripheral crown portion (25) of the latter, and in that the second annular member (21) is welded to the periphery of the first annular member (20) on the other side of the starter crown (130).

7. A damped flywheel according to Claim 1, characterised in that the second group of radial lugs (34) carries means for articulating the above mentioned resilient damping means.

8. A damped flywheel according to Claim 7, characterised in that the radial lugs (34) of the second group of radial lugs (34) are provided with holes (36) in alignment with holes in the first annular member (20), and in that axially orientated spindles are mounted in the said holes.

9. A damped flywheel according to Claim 8, characterised in that the resilient damping means (14) comprise cassettes (44) enclosing springs (46), and in that each cassette (44) includes a bearing (48) engaged on the corresponding spindle (40) of the first mass.

10. A damped flywheel according to Claim 9, characterised in that the first annular member (20) has apertures (28) defined between the radial arms (26), for accommodating the cassettes (44) therein.
